(19) Europäisches Patentamt
European Patent Office
Office européen des brevets

(11) Veröffentlichungsnummer: **0 174 515**
**A2**

(12) # EUROPÄISCHE PATENTANMELDUNG

(21) Anmeldenummer: **85110192.3**

(22) Anmeldetag: **14.08.85**

(51) Int. Cl.⁴: **A 01 N 57/36**
C 07 F 9/21, C 07 F 9/24
C 07 F 9/40
//(A01N57/36, 57:08, 57:06, 57:04, 53:00, 47:24, 47:22, 47:18, 43:32, 43:30, 43:08, 37:38, 37:36, 37:34, 37:10, 37:08, 37:06, 37:02)

(30) Priorität: **24.08.84 DE 3431256**

(43) Veröffentlichungstag der Anmeldung:
**19.03.86 Patentblatt 86/12**

(84) Benannte Vertragsstaaten:
**AT BE CH DE FR GB IT LI NL SE**

(71) Anmelder: **BAYER AG**
**Konzernverwaltung RP Patentabteilung**
**D-5090 Leverkusen 1 Bayerwerk(DE)**

(72) Erfinder: **Krüger, Bernd-Wieland, Dr.**
**Sillerstrasse 49**
**D-5600 Wuppertal 11(DE)**

(72) Erfinder: **Hoffmann, Hellmut, Prof. Dr.**
**Tersteegenweg 17**
**D-5600 Wuppertal(DE)**

(72) Erfinder: **Roos, Ernst, Dr.**
**Am Geusgarten 6**
**D-5068 Odenthal(DE)**

(72) Erfinder: **Behrenz, Wolfgang, Dr.**
**Untergruendemich 14**
**D-5063 Overath(DE)**

(54) **Phosphorheterocyclen enthaltende Schädlingsbekämpfungsmittel.**

(57) Die vorliegende Erfindung betrifft neue Schädlingsbekämpfungsmittel, welche Phosphorheterocyclen-Verbindungen der allgemeinen Formel I

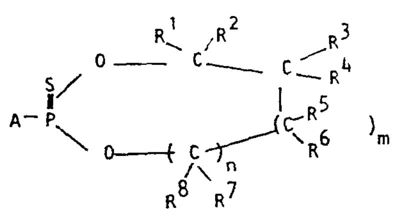

(I)

in welcher

A für Amino, Alkylamino, Dialkylamino oder N-Alkyl-N-arylamino oder für gegebenenfalls substituierte Reste aus der Reihe Alkyl, Alkenyl, Alkoxy, Alkenyloxy, Alkylthio, Aralkyl, Aralkoxy, Phenyl, Phenoxy oder Phenylthio steht,

$R^1$, $R^2$, $R^3$, $R^4$, $R^5$, $R^6$, $R^7$ und $R^8$ gleich oder verschieden sind und für Wasserstoff, für gegebenenfalls durch halogen substituierte Reste aus der Reihe Alkyl, Alkenyl, Alkoxy-alkyl und Alkylthioalkyl oder für Halogen, Nitro oder Dialkylaminoalkyl oder für gegebenenfalls substituiertes Phenyl oder Benzyl stehen und wobei zwei der Reste $R^1$ bis $R^8$ gemeinsam mit dem bzw. den Kohlenstoffatomen, an welche sie gebunden sind auch einen gegebenenfalls substituierten mono- oder bicyclischen Ring bilden können und

n und m gleich oder verschieden sind und 0 oder 1 bedeuten,

als Synergisten enthalten.

Croydon Printing Company Ltd.

BAYER AKTIENGESELLSCHAFT
Konzernverwaltung RP
Patentabteilung

5090 Leverkusen, Bayerwerk
S/Kü-c
III

Phosphorheterocyclen enthaltende Schädlingsbekämpfungsmittel

Die vorliegende Erfindung betrifft Phosphorheterocyclen enthaltende Schädlingsbekämpfungsmittel, vorzugsweise zur Bekämpfung von Arthropoden, insbesondere von Insekten, Milben und Spinnentieren.

Synergistische Mischungen von insektiziden Wirkstoffen, z.B. von Pyrethroiden mit bestimmten Methylendioxyphenyl-Derivaten, z.B. Piperonylbutoxid als Synergisten sind bereits bekannt geworden (vgl. z.B. K. Naumann, Chemie der Pflanzenschutz- und Schädlingsbekämpfungsmittel, Springer Verlag Berlin, Band 7 (1981) Seiten 3-6). Die Wirksamkeit dieser Mittel ist jedoch unter den in der Praxis auftretenden Bedingungen nicht immer voll befriedigend.

Es wurde nun gefunden, daß die Phosphorheterocyclen-Verbindungen der allgemeinen Formel I

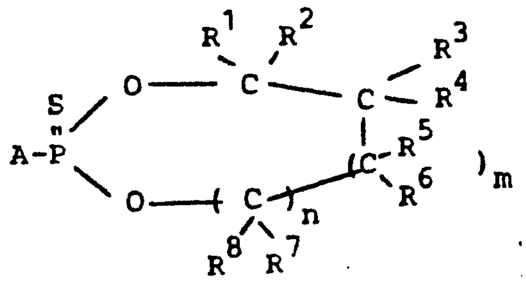

(I)

in welcher

A für Amino, Alkylamino, Dialkylamino oder N-Alkyl-N-arylamino oder für gegebenenfalls substituierte Reste aus der Reihe Alkyl, Alkenyl, Alkoxy, Alkenyloxy, Alkylthio, Aralkyl, Aralkoxy, Phenyl, Phenoxy oder Phenylthio steht,

$R^1$, $R^2$, $R^3$, $R^4$, $R^5$, $R^6$, $R^7$ und $R^8$ gleich oder verschieden sind und für Wasserstoff, für gegebenenfalls durch Halogen substituierte Reste aus der Reihe Alkyl, Alkenyl, Alkoxyalkyl und Alkylthioalkyl oder für Halogen, Nitro oder Dialkylaminoalkyl oder für gegebenenfalls substituiertes Phenyl oder Benzyl stehen und wobei zwei der Reste $R^1$ bis $R^8$ gemeinsam mit dem bzw. den Kohlenstoffatomen, an welche sie gebunden sind auch einen gegebenenfalls substituierten mono- oder bicyclischen Ring bilden können und

n und m gleich oder verschieden sind und 0 oder 1 bedeuten,

in Mischung mit Wirkstoffen, welche gegen Arthropoden wirksam sind, vorzugsweise mit Insektiziden und Akariziden sehr gute synergistische Eigenschaften aufweisen, welche ihre Verwendung in Schädlingsbekämpfungsmitteln ermöglicht.

Die vorliegende Erfindung betrifft somit die Verwendung der Phosphorheterocyclen der allgemeinen Formel I als Synergisten zur Wirkungsverbesserung von Arthropodiziden, insbesondere von Insektiziden und Akariziden.

Weiterhin betrifft die vorliegende Erfindung neue Schädlingsbekämpfungsmittel, welche die Phosphorheterocyclen der allgemeinen Formel I als Synergisten neben arthropodiziden, insbesondere insektiziden und akariziden Wirkstoffen enthalten.

Als Arthropodizide (gegen Arthropoden wirksame Stoffe) kommen praktisch alle üblichen Wirkstoffe in Frage (vgl. z.B. K.H. Büchel, Pflanzenschutz und Schädlingsbekämpfungsmittel, Thieme Verlag Stuttgart, 1977, und Farm Chemicals Handbook 1979, Meister Publishing Co, Willougby, 1979).

Die Verbindungen der Formel I enthalten mehrere Chiralitätszentren und liegen als optisch reine Diastereomere oder als Diastereomerengemische vor.

Bevorzugt werden die Phosphorheterocyclen der allgemeinen Formel (I) zusammen mit arthropodiziden

1. Carbamidsäureestern und/oder

2. Carbonsäureestern einschließlich der natürlichen sowie synthetischen Pyrethroide und/oder

3. Phosphorverbindungen, wie Phosphorsäure- und Phosphonsäureestern, einschließlich der Thio- und Dithioverbindungen

verwendet.

Überraschenderweise ist die Wirkung der neuen erfindungsgemäßen Wirkstoffkombinationen gegen Arthropoden wesentlich höher als die Wirkung der Einzelkomponenten bzw. die Summe der Wirkungen der Einzelkomponenten. Sie ist ferner wesentlich höher als die Wirkung von Wirkstoffkombinationen mit dem bekannten handelsüblichen Synergisten Piperonylbutoxid. Die erfindungsgemäß verwendbaren Phosphorheterocyclen zeigen außerdem ausgezeichnete synergistische Wirksamkeiten nicht nur bei einer Wirkstoffklasse, sondern bei Wirkstoffen aus den verschiedensten chemischen Stoffgruppen.

Die synergistische Wirkung der Verbindungen der allgemeinen Formel (I) zeigt sich besonders bevorzugt bei

1) Carbamidsäureestern der Formel (II)

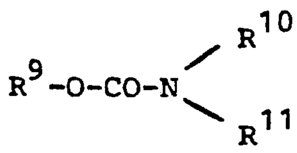

(II)

in welcher

$R^9$ für einen gegebenenfalls substituierten carbocyclischen oder heterocyclischen aromatischen Rest oder für einen gegebenenfalls substituierten Oximrest steht (wobei die weiter unten erläuterten Reste $R^9$ bevorzugt werden),

$R^{10}$ für $C_1$-$C_4$-Alkyl steht und

$R^{11}$ für Wasserstoff, $C_1$-$C_4$-Alkyl oder für einen Rest Y steht, wobei

Y für den Rest -CO-$R^{12}$ steht, worin

$R^{12}$ für Halogen, $C_1$-$C_4$-Alkyl, $C_1$-$C_4$-Alkoxy, $C_3$-$C_5$-Alkenoxy, $C_3$-$C_5$-Alkinoxy, $C_1$-$C_4$-Alkylthio, $C_1$-$C_4$-Alkyl-amino, Di-$C_1$-$C_4$-Alkylamino, $C_1$-$C_4$-Alkyl-hydroxylamino,

für gegebenenfalls durch Halogen, Nitro, Cyano, Trifluormethyl, $C_1$-$C_4$-Alkyl, $C_1$-$C_4$-Alkoxy, $C_1$-$C_4$-Alkylendioxy, $C_1$-$C_4$-Alkylthio, $C_1$-$C_4$-Alkoxy-carbonyl substituiertes

Phenoxy, Phenylthio oder Phenylamino, für 2,3-Dihydro-2,2-dimethyl-7-benzofuranyl oder für den Rest

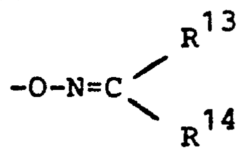

steht, worin

$R^{13}$ für Wasserstoff, $C_1$-$C_4$-Alkyl oder Di-$C_1$-$C_4$-alkylamino-carbonyl steht und

$R^{14}$ für $C_1$-$C_4$-Alkyl, $C_1$-$C_4$-Alkylthio, Cyano-$C_1$-$C_4$-alkylthio, $C_1$-$C_4$-Alkylthio-$C_1$-$C_4$-alkyl steht,

oder die beiden Reste $R^{13}$ und $R^{14}$ zusammen für gegebenenfalls durch Sauerstoff, Schwefel, SO oder $SO_2$ unterbrochenes $C_2$-$C_8$-Alkandiyl stehen, oder

in welcher

Y für den Rest $-S_o(O)_p-R^{15}$ steht, worin

o für 1 oder 2 und

p für 0, 1 oder 2 stehen und

$R^{15}$ für gegebenenfalls durch Halogen substituiertes $C_1$-$C_4$-Alkyl, $C_3$-$C_5$-Alkenyl, $C_3$-$C_5$-Alkinyl oder $C_3$-$C_6$-Cycloalkyl, für gegebenenfalls durch Halogen,

Cyano, Nitro, Trifluormethyl, Trifluormethoxy, Trifluormethylthio, $C_1$-$C_4$-Alkyl oder $C_1$-$C_4$-Alkoxy substituiertes Phenyl, Benzyl oder Phenylethyl oder für den Rest

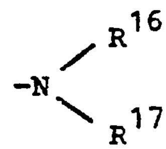

steht, worin

$R^{16}$ für $C_1$-$C_4$-Alkyl, $C_3$-$C_5$-Alkenyl, $C_3$-$C_5$-Alkinyl, $C_3$-$C_6$-Cycloalkyl oder Benzyl steht und

$R^{17}$ für $C_1$-$C_4$-Alkyl, $C_3$-$C_5$-Alkenyl, $C_3$-$C_5$-Alkinyl, $C_3$-$C_6$-Cycloalkyl, Benzyl, Phenylethyl, Halogencarbonyl, Formyl, $C_1$-$C_4$-Alkyl-carbonyl, $C_1$-$C_4$-Alkoxy-carbonyl, $C_1$-$C_4$-Alkoxyphenoxy-carbonyl, $C_3$-$C_5$-Alkinoxy-carbonyl, $C_3$-$C_5$-Alkenoxycarbonyl, $C_1$-$C_4$-Alkylthiocarbonyl, $C_1$-$C_4$-Alkyl-amino-carbonyl, $C_1$-$C_4$-Alkyl-hydroxylamino-carbonyl, $C_1$-$C_{10}$-Alkyl-phenoxycarbonyl, Di-$C_1$-$C_4$-alkyl-amino-carbonyl, Phenylthiocarbonyl, Phenoxycarbonyl, 2,3-Dihydro-2,2-dimethyl-7-benzofuranyloxycarbonyl, für gegebenenfalls durch Halogen, Cyano, Nitro, Trifluormethyl, $C_1$-$C_{10}$-Alkyl oder $C_1$-$C_4$-Alkoxy substituiertes Phenylsulfenyl, Phenylsulfinyl, Phenylsulfonyl oder Phenyl steht, oder für den Rest

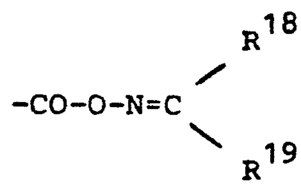

steht, worin

$R^{18}$ die oben für $R^{13}$ angegebene Bedeutung und

$R^{19}$ die oben für $R^{14}$ angegebene Bedeutung hat,

wobei ferner im Rest 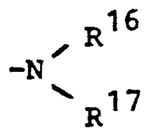 die Reste $R^{16}$ und $R^{17}$ zusammen für eine gegebenenfalls durch Sauerstoff oder Schwefel unterbrochene Kohlenwasserstoffkette mit 3 bis 8 Kohlenstoffatomen stehen und worin weiter $R^{15}$ auch für den gleichen Rest stehen kann, an den der Rest $-S_o(O)_p-R^{15}$ gebunden ist.

Als Wirkstoffkomponenten ganz besonders bevorzugt sind Carbamidsäureester der Formel (II), in welcher

$R^9$ für gegebenenfalls durch $C_1$-$C_4$-Alkyl, $C_2$-$C_4$-Alkenyl, $C_1$-$C_4$-Alkoxy, $C_1$-$C_4$-Alkoxy-methyl, $C_1$-$C_4$-Alkylthio, $C_1$-$C_4$-Alkylthio-methyl, $C_1$-$C_4$-Alkylamino, Di-($C_1$-$C_4$-alkyl)-amino, Di-($C_3$-$C_4$-alkenyl)-amino, Halogen, Dioxolanyl, Methylendioxy und/oder durch den Rest $-N=CH-N(CH_3)_2$ substituierte Reste aus der Reihe Phenyl, Naphthyl, 2,3-Dihydro-7-benzofuranyl, Pyrazolyl oder Pyrimidinyl steht, oder in welcher

$R^9$ für einen Alkylidenaminorest der Formel

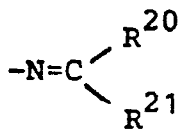

steht, in welcher

$R^{20}$ und $R^{21}$ die oben für $R^{13}$ bzw. $R^{14}$ angegebene Bedeutung haben, und

$R^{10}$ für $C_{1-4}$-Alkyl steht und

$R^{11}$ für Wasserstoff oder $C_1$-$C_4$-Alkyl (vorzugsweise für Wasserstoff) steht.

Als Beispiele für die Carbamidsäureester der Formel (II) seien die folgenden N-Methylcarbamidsäureester genannt: 2-Methyl-phenyl-, 2-Ethyl-phenyl-, 2-iso-Propyl-phenyl-, 2-sec-Butyl-phenyl-, 2-Methoxy-phenyl-, 2-Ethoxy-phenyl-, 2-iso-Propoxy-phenyl-, 4-Methyl-phenyl-, 4-Ethyl-phenyl-, 4-n-Propyl-phenyl-, 4-Methoxy-phenyl-, 4-Ethoxy-phenyl-, 4-n-Propoxy-phenyl-, 3,4,5-Trimethyl-phenyl-, 3,5-Dimethyl-4-methylthio-phenyl-, 3-Methyl-4-dimethylaminophenyl-, 2-Ethylthiomethyl-phenyl-, 1-Naphthyl-, 2,3-Dihydro-2,2-dimethyl-7-benzofuranyl, 2,3-(Dimethyl-methylendioxy)-phenyl-, 2-(4,5-Dimethyl-1,3-dioxolan-2-yl)-phenyl-, 1-Methylthio-ethyliden-amino-, 2-Methylthio-2-methylpropylidenamino-, 1-(2-Cyano-ethylthio)-ethylidenamino- und 1-Methylthiomethyl-2,2-dimethylpropylidenamino-N-methyl-carbamidsäureester.

Die synergistische Wirkung der Verbindungen der allgemeinen Formel (I) zeigt sich weiter bevorzugt bei

2) Carbonsäureestern der Formel (III)

$$R^{22}\text{-CO-O-}\underset{}{\overset{R^{23}}{\overset{|}{C}}}H\text{-}R^{24} \qquad \text{(III)}$$

in welcher

$R^{22}$ für einen offenkettigen oder cyclischen Alkylrest steht, der gegebenenfalls substituiert ist durch Halogen, Alkyl, Cycloalkyl, durch gegebenenfalls durch Halogen, Alkyl und/oder Alkoxy substituiertes Alkenyl, durch Phenyl oder Styryl, welche gegebenenfalls durch Halogen, gegebenenfalls Halogen-substituierte Reste aus der Reihe Alkyl, Alkoxy, Alkylendioxy und/oder Alkylthio substituiert sind, durch spirocyclisch verknüpftes, gegebenenfalls Halogen-substituiertes Cycloalk(en)yl, welches gegebenenfalls benzannelliert ist, in welcher weiter

$R^{23}$ für Wasserstoff, Alkyl, Halogenalkyl, Alkenyl, Alkinyl oder Cyano steht, und

$R^{24}$ für einen gegebenenfalls substituierten Alkyl- oder Arylrest oder für einen Heterocyclus steht, oder zusammen mit $R^{23}$ und dem Kohlenstoffatom, an das beide Reste gebunden sind, einen Cyclopentenonring bildet.

Ganz besonders als Wirkstoffkomponenten bevorzugt sind Carbonsäureester der Formel (III), in welcher

$R^{22}$ (a) für den Rest

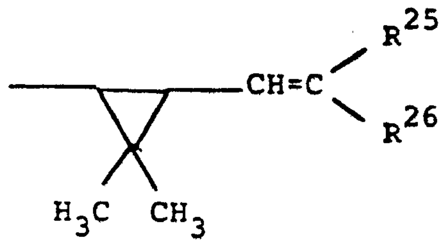

steht, worin

$R^{25}$ für Wasserstoff, Methyl, Fluor, Chlor oder Brom und

$R^{26}$ für Methyl, Fluor, Chlor, Brom, $C_1$-$C_2$-Fluoralkyl oder $C_1$-$C_2$-Chlorfluoralkyl oder für gegebenenfalls durch Halogen und/oder gegebenenfalls Halogen-substituierte Reste der Reihe $C_1$-$C_4$-Alkyl, $C_1$-$C_4$-Alkoxy, $C_1$-$C_4$-Alkylthio und/oder $C_1$-$C_2$-Alkylendioxy substituiertes Phenyl steht, oder worin beide Reste $R^{25}$ und $R^{26}$ für $C_2$-$C_5$-Alkandiyl (Alkylen) stehen;

oder in welcher

$R^{22}$ (b) für den Rest $-\underset{R^{28}}{\underset{|}{CH}}-R^{27}$ steht, worin

$R^{27}$ für gegebenenfalls durch Halogen und/oder durch gegebenenfalls Halogen-substituierte Reste der Reihe $C_1$-$C_4$-Alkyl, $C_1$-$C_4$-Alkoxy, $C_1$-$C_4$-Alkylthio oder $C_1$-$C_2$-Alkylendioxy substituiertes Phenyl steht und

$R^{28}$ für Isopropyl oder Cyclopropyl steht;

oder in welcher

$R^{22}$ (c) für Methyl oder einen der Reste

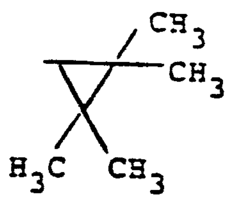
,
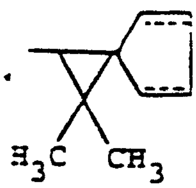

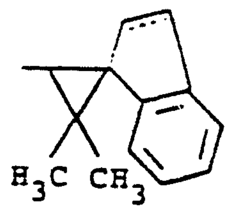

wobei die gepunkteten Linien mögliche Doppelbindungen andeuten sollen, steht,

und in welcher

$R^{23}$ für Wasserstoff, $C_1$-$C_4$-Alkyl, $C_1$-$C_4$-Halogenalkyl, Cyano oder Ethinyl steht und

$R^{24}$ für die Reste der Reihe Phenyl, Furyl oder Tetrahydrophthalimido steht, wobei diese Reste substituiert sein können durch Halogen und/oder Reste der Reihe $C_1$-$C_4$-Alkyl, $C_2$-$C_4$-Alkenyl, $C_1$-$C_4$-Alkoxy, $C_2$-$C_4$-Alkenoxy, $C_1$-$C_4$-Alkylthio, $C_1$-$C_2$-Alkylendioxy, Phenoxy und/oder Benzyl, welche

ihrerseits durch Halogen substituiert sein können und wobei $R^{24}$ vorzugsweise für Pentafluorphenyl, 3,4-Dichlorphenyl, Tetrahydrophthalimido oder für Phenoxyphenyl, steht, welches in einem oder beiden Phenylringen durch Halogen substituiert sein kann.

Weiter sind die natürlich vorkommenden Pyrethroide (wie Pyrethreum) als Carbonsäureester der Formel (III) besonders bevorzugt.

Als Beispiele für die Carbonsäureester der Formel (III) seien genannt:

Essigsäure-(2,2,2-trichlor-1-(3,4-dichlor-phenyl)-ethyl)-ester, 2,2-Dimethyl-3-(2-methyl-propen-1-yl)-cyclopropan-carbonsäure-(3,4,5,6-tetrahydro-phthalimido-methyl)-ester, 2,2-Dimethyl-3-(2,2-dichlorvinyl)-cyclopropan-carbonsäure-(3-phenoxy-benzyl)-ester, 2,2-Dimethyl-3-(2,2-dichlorvinyl)-cyclopropan-carbonsäure-(α-cyano-3-phenoxy-benzyl)-ester, 2,2-Dimethyl-3-(2,2-dichlorvinyl)-cyclopropancarbonsäure-(α-cyano-4-fluor-3-phenoxy-benzyl)-ester, 2,2-Dimethyl-3-(2,2-dichlorvinyl)-cyclopropancarbonsäure-(pentafluor-benzyl)-ester, 2,2-Dimethyl-3-(2,2-dibromvinyl)-cyclopropancarbonsäure-(α-cyano-3-phenoxy-benzyl)-ester und 3-Methyl-2-(4-chlor-phenyl)-butansäure-(α-cyano-3-phenoxy-benzyl)-ester.

Weiter zeigt sich die synergistische Wirkung der Verbindungen der allgemeinen Formel (I) bevorzugt bei

3) Phosphorsäure- und Phosphonsäureestern der allgemeinen Formel (IV)

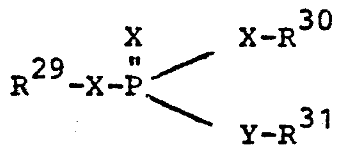 (IV)

in welcher

X gleich oder verschieden ist und für O oder S steht und

Y für O, S, -NH- oder für eine direkte Bindung zwischen dem zentralen P-Atom und $R^{31}$ steht und

$R^{29}$ und $R^{30}$ gleich oder verschieden sind und für gegebenenfalls substituiertes Alkyl oder Aryl stehen,

$R^{31}$ für Wasserstoff, gegebenenfalls substituiertes Alkyl, Aryl, Heteroaryl, Aralkyl, Alkenyl, Dioxanyl oder einen Oximrest oder für den gleichen Rest steht, an den es gebunden ist.

Besonders bevorzugt sind Phosphorsäure- und Phosphonsäureester der Formel (IV), in welcher

$R^{29}$ und $R^{30}$ gleich oder verschieden sind und für $C_1$-$C_4$-Alkyl oder Phenyl stehen,

$R^{31}$ für Wasserstoff, Alkyl mit 1 bis 4 Kohlenstoffatomen steht, das gegebenenfalls durch Halogen, Hydroxyl, Cyano, gegebenenfalls Halogen-substituiertes Phenyl, Carbamoyl, Alkylsulfonyl, Alkylsulfinyl, Alkylcarbonyl, Alkoxy, Alkylthio, Alkoxycarbonyl, Alkylaminocarbonyl, letztere mit jeweils bis zu 6 Kohlenstoffatomen, substituiert ist, für Alkenyl mit bis zu 4 Kohlenstoffatomen, das gegebenenfalls durch Halogen, gegebenenfalls Halogen-substituiertes Phenyl oder $C_1$-$C_4$-Alkoxycarbonyl substituiert ist, oder für den Rest der allgemeinen Formel

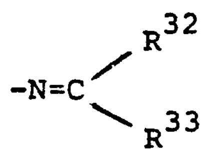

wobei $R^{32}$ und $R^{33}$ die oben für $R^{13}$ bzw. $R^{14}$ angegebene Bedeutung besitzen, oder für Cyano oder Phenyl stehen,
und in welcher

$R^{31}$ ferner für Dioxanyl, das durch denselben Rest substituiert ist, an den $R^{30}$ gebunden ist, oder $R^{31}$ für den gleichen Rest

an den es gebunden ist steht, oder $R^{31}$ für Phenyl, das gegebenenfalls durch Methyl, Nitro, Cyano, Halogen und/oder Methylthio substituiert ist steht, wobei

$R^{31}$ außerdem besonders bevorzugt für gegebenenfalls durch $C_1$-$C_4$-Alkoxy, $C_1$-$C_4$-Alkylthiomethyl, $C_1$-$C_4$-Alkyl und/oder durch Halogen substituierte heteroaromatische Reste, wie Pyridinyl, Chinolinyl, Chinoxalinyl, Pyrimidinyl oder Benzo-1,2,4-triazinyl steht.

Im einzelnen seien genannt:

O,O-Dimethyl- bzw. O,O-Diethyl-O-(2,2-dichlor- bzw. 2,2-dibromvinyl)-phosphorsäureester,
O,O-Diethyl-O-(4-nitro-phenyl)-thionophosphorsäureester
O,O-Dimethyl-O-(3-methyl-4-methylthio-phenyl)-thionophosphorsäureester
O,O-Dimethyl-O-(3-methyl-4-nitro-phenyl)-thionophosphorsäureester,
O-Ethyl-S-n-propyl-O-(2,4-dichlorphenyl)-thionophosphorsäureester,
O-Ethyl-S-n-propyl-O-(4-methylthio-phenyl)-thionophosphorsäureester,
O,O-Dimethyl-S-(4-oxo-1,2,3-benzotriazin(3)yl-methyl)-thionothiolphosphorsäureester,
O-Methyl-O-(2-iso-propyl-6-methoxy-pyrimidin(4)yl)-thionomethanphosphonsäureester,

O,O-Diethyl-O-(2-iso-propyl-6-methyl-pyrimidin(4)yl)-thionophosphorsäureester,
O,O-Diethyl-O-(3-chlor-4-methyl-cumarin(7)yl)-thionophosphorsäureester,
O,O-Dimethyl-2,2,2-trichlor-1-hydroxy-ethan-phosphonsäureester,
O,O-Dimethyl-S-(methylaminocarbonyl-methyl)-thionophosphorsäureester.

Die erfindungsgemäß verwendbaren Phosphorheterocyclen-Verbindungen sind durch die allgemeine Formel (I) charakterisiert.

Die in der Formel (I) angegebenen Reste haben vorzugsweise die folgende Bedeutung:

Die Alkylgruppe im Alkylamino-Rest A ist geradkettig oder verzweigt und enthält 1 bis 8, vorzugsweise 1 bis 6 und insbesondere 1 bis 4 Kohlenstoffatomen. Beispielhaft seien Methyl, Ethyl, n- und i.-Propyl genannt. Entsprechendes gilt für die Alkylgruppe im N-Alkyl-N-Arylamino-Rest A.

Die Alkylgruppen im Dialkylamino-Rest A sowie in den Dialkylamino-alkyl-Resten $R^1$ bis $R^8$ sind gleich oder verschieden und geradkettig oder verzweigt und enthalten vorzugsweise 1 bis 6, insbesondere 1 bis 4 Kohlenstoffatome. Als Beispiele seien Methyl, Ethyl sowie n- und i.-Propyl genannt.

In den Dialkylamino-alkyl-Resten $R^1$ bis $R^8$ enthalten die Alkylgruppen, an welche die Dialkylaminokomponente gebunden ist, vorzugsweise 1 bis 6, insbesondere 1 bis 4 Kohlenstoffatome.

Als Arylgruppe in N-Alkyl-N-arylamino steht vorzugsweise die Phenylgruppe.

Als gegebenenfalls substituiertes Alkyl A steht geradkettiges oder verzweigtes Alkyl mit vorzugsweise 1 bis 6, insbesondere 1 bis 4 Kohlenstoffatomen. Beispielhaft seien gegebenenfalls substituiertes Methyl, Ethyl, n- und i.-Propyl, n.-, i.- und t.-Butyl, genannt.

Als gegebenenfalls substituiertes Alkenyl oder Alkenyloxy A steht geradkettiges oder verzweigtes Alkenyl oder Alkenyloxy mit vorzugsweise 2 bis 6, insbesondere 2 bis 4 Kohlenstoffatomen. Beispielhaft seien gegebenenfalls substituiertes Ethenyl, Propenyl-(1), Propenyl-(2) und Butenyl-(3), Propenyloxy und Butenyloxy genannt.

Als gegebenenfalls substituiertes Alkoxy A steht geradkettiges oder verzweigtes Alkoxy mit vorzugsweise 1 bis 6, insbesondere 1 bis 4 Kohlenstoffatomen. Beispielhaft seien gegebenenfalls substituiertes Methoxy, Ethoxy, n.- und i.-Propoxy und n.-, i.- und t.-Butoxy genannt.

Als gegebenenfalls substituiertes Alkylthio A steht geradkettiges oder verzweigtes Alkylthio mit vorzugsweise 1 bis 6, insbesondere 1 bis 4 Kohlenstoffatomen. Beispielhaft seien gegebenenfalls substituiertes Methylthio, Ethylthio, n.- und i.-Propylthio, n.-, i.- und t.-Butylthio genannt.

Als gegebenenfalls substituiertes Aralkyl oder Aralkoxy A steht gegebenenfalls im Arylteil und/oder Alkylteil substituiertes Aralkyl oder Aralkoxy mit vorzugsweise 6 oder 10, insbesondere 6 Kohlenstoffatomen im Arylteil und vorzugsweise 1 bis 4, insbesondere 1 oder 2 Kohlenstoffatomen im Alkylteil, wobei der Alkylteil geradkettig oder verzweigt sein kann. Beispielhaft seien gegebenenfalls substituiertes Benzyl, Phenylethyl, Benzyloxy und Phenylethyloxy genannt.

In gegebenenfalls durch Halogen substituiertes Alkyl $R^1$ bis $R^8$ bedeutet Alkyl geradkettiges oder verzweigtes Alkyl mit vorzugsweise 1 bis 6, insbesondere 1 bis 4 Kohlenstoffatomen. Beispielhaft seien gegebenenfalls durch Halogen, vorzugsweise Fluor, Chlor oder Brom substituiertes Methyl, Ethyl, n.- und i.-Propyl, n.-, i.- und t.-Butyl, genannt, wobei Chlormethyl und Brommethyl besonders hervorgehoben sein sollen.

Als gegebenenfalls durch Halogen substituiertes Alkenyl $R^1$ bis $R^8$ steht geradkettiges oder verzweigtes Alkenyl mit vorzugsweise 2 bis 6, insbesondere 2 bis 4

Kohlenstoffatomen. Beispielhaft seien gegebenenfalls durch Halogen, vorzugsweise Fluor, Chlor oder Brom substituiertes Ethenyl, Propenyl-(1), Propenyl-(2) und Butenyl-(3) genannt.

Die gegebenenfalls durch Halogen (vorzugsweise Fluor, Chlor oder Brom) substituierten Alkoxyalkyl- und Alkylthioalkyl-Reste $R^1$ bis $R^8$ enthalten vorzugsweise 2 bis 8, insbesondere 2 bis 6 Kohlenstoffatome.

Als Beispiele seien durch Halogen substituiertes Methoxymethyl, Ethoxymethyl, Methoxymethyl, Methylthiomethyl, Methylthioethyl und Ethylthiomethyl genannt.

Zwei der Reste $R^1$ bis $R^8$ können gemeinsam mit dem bzw. den Kohlenstoffatomen, an welche sie gebunden sind, 5- bis 7-gliedrige Cycloalkyl oder Cycloalkenylringe bilden, welche zusätzlich durch eine Methylen- oder Ethylengruppe überbrückt sein können und welche weiterhin durch 1 oder 2, vorzugsweise 1 Alkylgruppe, vorzugsweise Methyl oder Ethyl substituiert sein können.

Die gegebenenfalls substituierten Reste A und $R^1$ bis $R^8$ können einen oder mehrere, vorzugsweise 1 bis 3, insbesondere 1 oder 2 gleiche oder verschiedene Substituenten tragen. Als Substituenten seien beispielhaft aufgeführt: Alkyl mit vorzugsweise 1 bis 4, insbesondere 1 oder 2 Kohlenstoffatomen, wie Methyl,

Ethyl, n- und i.-Propyl und n.-, i.- und t.-Butyl; Alkoxy mit vorzugsweise 1 bis 4, insbesondere 1 oder 2 Kohlenstoffatomen, wie Methoxy, Ethoxy, n.- und i.-Propyloxy und n.-, i.- und t.-Butyloxy; Alkylthio mit vorzugsweise 1 bis 4, insbesondere 1 oder 2 Kohlenstoffatomen, wie Methylthio, Ethylthio, n.- und i.-Propylthio und n.-, und t.-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl; Halogen, vorzugsweise Fluor, Chlor, Brom und Jod, insbesondere Chlor und Brom; Cyano; Nitro; Alkylcarbonyl mit vorzugsweise 2 bis 5 Kohlenstoffatomen und Alkoxycarbonyl mit vorzugsweise 2 bis 5 Kohlenstoffatomen.

Halogen bedeutet überall wo nicht anders angegeben Fluor, Chlor, Brom und Jod, vorzugsweise Fluor, Chlor und Brom, insbesondere Chlor und Brom.

Vorzugsweise steht in den Verbindungen der allgemeinen Formel (I) einer der Indices n und m für 0 und der andere für 0 oder 1.

Bevorzugt werden Verbindungen der allgemeinen Formel (I), als Synergisten verwendet, in welchen

A für Amino, $C_1$-$C_4$-Alkylamino, Di-($C_1$-$C_4$-alkyl)-amino und N-Phenyl-N-($C_1$-$C_4$-alkyl)-amino oder für gegebenenfalls durch Halogen substituiertes $C_1$-$C_4$-Alkyl, $C_2$-$C_4$-Alkenyl, $C_2$-$C_6$-Alkenyloxy, $C_1$-$C_4$-Alkoxy, Phenyl, Benzyl, Benzyloxy oder Phenethoxy oder für Phenoxy, welches durch einen Rest der Reihe Halogen, Cyano, Nitro, Carbamoyl, $C_1$-$C_4$-Alkylsulfonyl, $C_1$-$C_4$-Alkylsulfinyl, $C_1$-$C_4$-Alkylcarbonyl, $C_1$-$C_4$-Alkyl, $C_1$-$C_4$-Alkoxy, $C_1$-$C_4$-Alkylthio und/oder $C_1$-$C_4$-Alkoxycarbonyl substituiert sein kann, steht,

$R^1$ bis $R^8$ gleich oder verschieden sind und für Wasserstoff, Halogen, $NO_2$, $C_1$-$C_6$-Alkyl, welches durch Halogen substituiert sein kann, $C_2$-$C_8$-Alkenyl, Di-($C_1$-$C_4$-alkyl)-amino, $C_1$-$C_4$-Alkoxy-$C_1$-$C_4$-alkyl, $C_1$-$C_4$-Alkylthio-$C_1$-$C_4$-alkyl, Benzyl oder Phenyl stehen oder in welchen 2 der Reste $R^1$ bis $R^8$ gemeinsam mit dem oder den Kohlenstoffatomen, an welche sie gebunden sind, einen $C_5$-$C_7$-Cycloalkyl- oder -Cycloalkenyl-Ring bilden, welcher durch Methyl oder Ethyl substituiert sein kann und welcher durch eine Methylen- oder Ethylengruppe zu einem bicyclischen Ring überbrückt sein kann und

n und m gleich oder verschieden sind und für 0 oder 1 stehen.

Besonders bevorzugt werden Verbindungen der allgemeinen Formel (I) als Synergisten verwendet, in welchen

A für $C_1$-$C_4$-Alkyl, $C_1$-$C_6$-Alkoxy, $C_2$-$C_5$-Alkenyloxy, $C_1$-$C_4$-Alkylthio, $C_1$-$C_4$-Alkylamino oder Di-($C_1$-$C_4$-alkyl)-amino steht,

$R^1$ bis $R^8$ gleich oder verschieden sind und für Wasserstoff, Nitro, gegebenenfalls durch Halogen substituiertes $C_1$-$C_4$-Alkyl oder $C_1$-$C_4$-Alkylthio-$C_1$-$C_4$-alkyl stehen oder zwei der Reste $R^1$ bis $R^8$ gemeinsam mit dem bzw. den Kohlenstoffatomen, an welche sie gebunden sind, einen 5- oder 6-gliedrigen Cycloalkyl- oder Cycloalkenylring bilden, der durch eine Methylen- oder Ethylen-Gruppe zu einem bicyclischen Ring überbrückt sein kann und

n und m gleich oder verschieden sind und für 0 oder 1 stehen.

Ganz besonders bevorzugt werden hierbei Verbindungen der allgemeinen Formel (I), in welchen

A für $C_1$-$C_4$-Alkyl oder $C_1$-$C_6$-Alkoxy steht,

$R^1$ bis $R^8$ gleich oder verschieden sind und für Wasserstoff oder gegebenenfalls durch Chlor oder Brom substituiertes $C_1$-$C_4$-Alkyl stehen und

n und m gleich oder verschieden sind und für 0 oder 1 stehen, wobei vorzugsweise m für 0 oder 1 und n für 0 stehen.

Im Hinblick auf die Bedeutung für n und m ergeben sich folgende bevorzugte Verbindungen der allgemeinen Formel (I):

Wenn n und m beide 0 bedeuten, stehen bevorzugt

A für gegebenenfalls durch Halogen substituiertes (vorzugsweise unsubstituiertes) $C_1$-$C_4$-Alkyl,

$R^1$ und $R^3$ für Wasserstoff und

$R^2$ und $R^4$ welche gleich oder verschieden sind, für Wasserstoff, gegebenenfalls durch Halogen substituiertes $C_1$-$C_6$-Alkyl oder $R^2$ und $R^4$ bilden gemeinsam mit den Kohlenstoffatomen, an welche sie gebunden sind, einen 5- oder 6-gliedrigen Cycloalkyl- oder Cycloalkenylring, der durch Methylen oder Ethylen zu einem bicyclischen Ring überbrückt sein kann.

Wenn m 1 und n 0 bedeuten, stehen bevorzugt

A für gegebenenfalls durch Halogen substituiertes (vorzugsweise unsubstituiertes) $C_1$-$C_4$-Alkyl,

$R^1$, $R^2$, $R^5$ und $R^6$, welche gleich oder verschieden sind, für Wasserstoff, gegebenenfalls durch Halogen substituiertes $C_1$-$C_6$-Alkyl und

$R^3$ und $R^4$, welche gleich oder verschieden sind, für Wasserstoff, gegebenenfalls durch Halogen substituiertes $C_1$-$C_6$-Alkyl oder $R^3$ und $R^4$ bilden gemeinsam mit dem Kohlenstoffatom, an welches sie gebunden sind, einen 5- oder 6-gliedrigen Cycloalkyl- oder Cycloalkenylring der durch eine Methylen- oder Ethylengruppe zu einem bicyclischen Ring überbrückt sein kann.

Wenn n und m 1 bedeuten, stehen bevorzugt

A für gegebenenfalls durch Halogen substituiertes (vorzugsweise unsubstituiertes) $C_1$-$C_4$-Alkyl und

$R^1$ bis $R^8$, welche gleich oder verschieden sind, für Wasserstoff oder $C_1$-$C_6$-Alkyl.

Besonders bevorzugte Verbindungen der allgemeinen Formel (I) sind die Verbindungen, in welchen A für Ethyl steht.

Weiterhin werden solche Verbindungen bevorzugt, bei welchen wenigstens einer der Reste $R^1$ oder $R^2$ für Wasserstoff steht und bei welchen für den Fall, daß n 0 bedeutet, wenigstens einer der Reste $R^5$ und $R^6$ für Wasserstoff steht, und bei welchen, für den Fall, daß n 1 bedeutet, wenigstens einer der Reste $R^7$ und $R^8$ für Wasserstoff steht. Ganz besonders bevorzugt sind die Verbindungen der Herstellungsbeispiele 3, 4, 5, 7, 10 und 11.

Die Verbindungen der allgemeinen Formel (I) sind bekannt oder können nach bekannten Methoden und Verfahren hergestellt werden (vgl. z.B. Synth. React. Inorg. Met.-Org. Chem. 1976, 6 (2), 133-155; US-PS 3 006 947).

Man erhält demgemäß die Verbindungen der Formel (I) wenn man die an sich bekannten Halogenide der allgemeinen Formel (V)

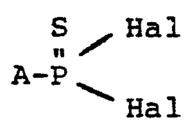

(V)

in welcher

Hal für Halogen, insbesondere für Chlor steht und A die oben angegebene Bedeutung hat, mit an sich bekannten Verbindungen der Formel VI

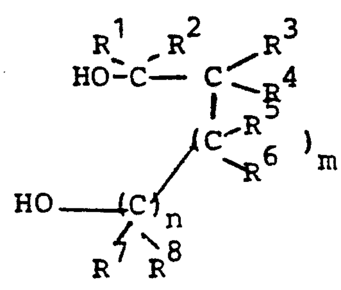

(VI)

in welcher

$R^1$ bis $R^8$ und n und m die oben genannte Bedeutung haben,

gegebenenfalls in Gegenwart eines Säureakzeptors, wie z.B. Triethylamin oder Kaliumcarbonat und gegebenenfalls unter Verwendung eines Verdünnungsmittels, wie z.B. Toluol oder Acetonitril, bei Temperaturen zwischen 0 und 110°C umsetzt. Die Aufarbeitung erfolgt nach üblichen Methoden, beispielsweise durch Extraktion der Produkte mit Toluol aus der mit Wasser verdünnten Reaktionsmischung, Waschen der organischen Phase mit Wasser, Trocknen und Destillieren oder sogenanntes "Andestillieren", d.h. durch längeres Erhitzen unter vermindertem Druck auf mäßig erhöhte Temperaturen, um von den letzten flüchtigen Bestandteilen zu befreien.

Zur Charakterisierung der Verbindungen dienen Brechungsindex, Schmelzpunkt, Rf-Wert oder Siedepunkt.

Die Gewichtsverhältnisse der Synergisten der allgemeinen Formel (I) und Wirkstoffe (Arthropodizide) können in einem relativ großen Bereich variiert werden. Im allgemeinen werden die als Synergisten verwendeten Verbindungen der Formel (I) mit den übrigen Wirkstoffen in Mischungsverhältnissen zwischen 1 : 100 und 100 : 1, vorzugsweise zwischen 1 : 5 und 5 : 1 (Gewichtsteile) eingesetzt.

Die erfindungsgemäßen Wirkstoffkombinationen besitzen nicht nur eine schnelle knock-down-Wirkung, sondern bewirken auch die Abtötung der tierischen Schädlinge,

insbesondere von Insekten und Milben, die in der Landwirtschaft, in Forsten, im Vorrats- und Materialschutz sowie im Hygienebereich vorkommen. Sie sind gegen normal sensible und resistente Arten sowie gegen alle oder einzelne Entwicklungsstadien wirksam.

Zu den tierischen Schädlingen, welche unter Verwendung der Verbindungen der Formel (I) bekämpft werden können, gehören beispielsweise:

Aus der Ordnung der Isopoda z.B. Oniscus asellus, Porcellio scaber.
Aus der Ordnung der Thysanura z.B. Lepisma saccharina.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Schistocerca gregaria.
Aus der Ordnung der Dermaptera z.B. Forficula auricularia.
Aus der Ordnung der Isoptera z.B. Reticulitermes spp.
Aus der Ordnung der Anoplura z.B. Pediculus humanus corporis, Haematopinus spp., Linograthus spp.
Aus der Ordnung der Mallophaga z.B. Trichodectes spp., Damalinea spp.
Aus der Ordnung der Heteroptera z.B. Cimex lectularius, Rhodnius prolixus, Triatoma spp.
Aus der Ordnung der Homoptera z.B. Myzus spp., und Psylla spp.
Aus der Ordnung der Lepidoptera z.B. Ephestia kuehniella und Galleria mellonella.

Aus der Ordnung der Coleoptera z.B. Anobium punctatum, Rhizopertha dominica, Bruchidius obtectus, Acanthoscelides obtectus, Hylotrupes bajulus, Oryzaephilus surinamensis, Sitophilus spp., Dermestes spp., Trogoderma spp., Anthrenus spp., Attagenus spp., Lyctus spp., Ptinus spp., Niptus hololeucus, Gibbium psylloides, Tribolium spp. und Tenebrio molitor.
Aus der Ordnung der Hymenoptera z.B. Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Gastrophilus spp., Hyppobosca spp., Stomoxys spp., Oestrus spp., Hypderma spp. und Tabanus spp.
Aus der Ordnung der Siphonaptera z.B. Xenopsylla cheopis, Ceratophyllus spp.
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Boophilus spp., Rhipicephalus spp., Amblyomma spp., Hyalomma spp., Ixodes spp., Psoroptes spp., Chorioptes spp., Sarcoptes spp.

Die Wirkstoffkombinationen aus den Verbindungen der Formel (I) und den übrigen Wirkstoffen können in die üblichen Formulierungen übergeführt werden, wie Lösungen, Emulsionen, Spritzpulver, Suspensionen,

Pulver, Stäubemittel, Schäume, Pasten, lösliche Pulver, Aerosole, Suspensions-Emulsionskonzentrate, Wirkstoffimprägnierte Natur- und synthetische Stoffe, Feinstverkapselungen in polymeren Stoffen, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffgemische mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glykol, sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie

Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel: nichtionogene und anionische Emulgatoren, wie Polyoxyethylen-Fettsäure-Ester, Polyoxyethylen-Fettalkohol-Ether, z.B. Alkylaryl-polyglykol-ether, Alkylsulfonate; als Dispergiermittel: z.B. Lignin- und Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische

Farbstoffe, wie Alizarin-, Azo- und Metallphthalocyaninfarbstoffe, und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffkombination, vorzugsweise zwischen 0,5 und 90 %.

Die Anwendung der erfindungsgemäßen Wirkstoffkombinationen erfolgt in Form ihrer handelsüblichen Formulierungen und/oder den aus diesen Formulierungen bereiteten Anwendungsformen.

Der gesamte Wirkstoffgehalt (einschließlich Synergist) der aus den handelsüblichen Formulierungen bereiteten Anwendungsformen kann in weiten Bereichen variieren. Die Wirkstoffkonzentration der Anwendungsformen kann von 0,001 bis zu 95 Gew.-% Wirkstoffkombination, vorzugsweise zwischen 0,01 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffkombinationen durch eine hervorragende Residualwirkung auf Holz und Ton sowie durch eine gute Alkalistabilität auf gekälkten Unterlagen aus.

Anhand der folgenden biologischen Beispiele soll die Wirksamkeit der erfindungsgemäß verwendbaren Verbindungen der Formel (I) erläutert werden:

I <u>Beispiele für erfindungsgemäß verwendbare Wirkstoffe</u>

A) 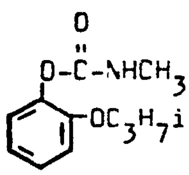 (Propoxur)

B) 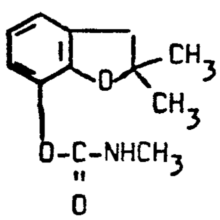 (Carbofuran)

C) 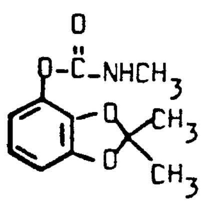 (Bendiocarb)

D) 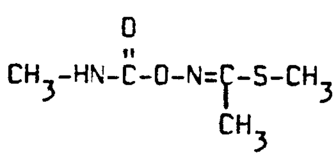 (Methomyl)

E) Pyrethrine natürlicher Herkunft als 25 %iger Extrakt

F) 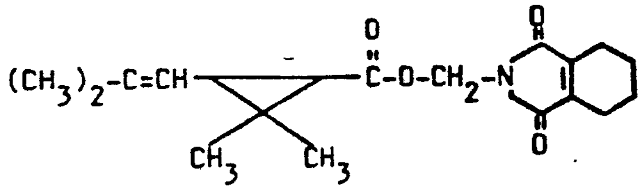 (Tetramethrin)

G) 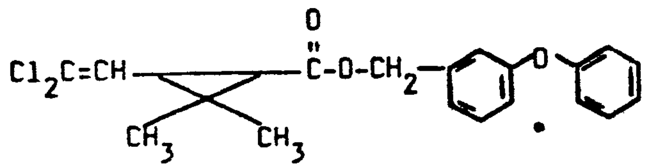 (Permethrin)

H) 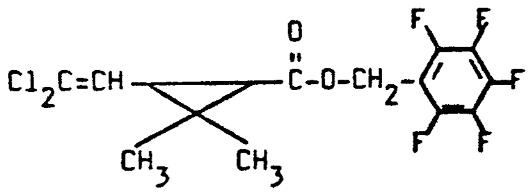 (Fenfluthrin)

I) 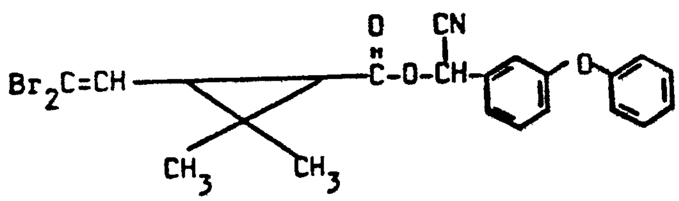 (Decamethrin)

J) 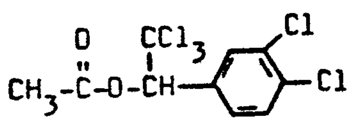 (Plifenate)

K) 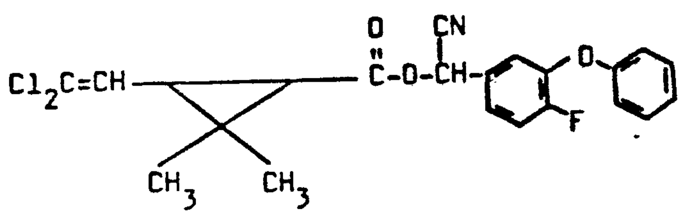 (Cyfluthrin)

L) 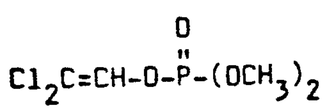 (DDVP)

## II Beispiele von erfindungsgemäß verwendbaren Synergisten

| Synergist Nr. | Formel | Verbindung aus Herstellungsbeispiel Nr. |
|---|---|---|
| 1.) | 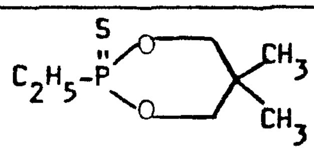 | 1 |
| 2.) | 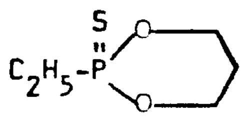 | 3 |
| 3.) | 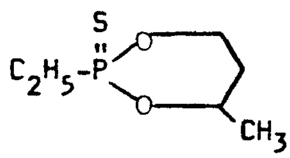 | 14 |
| 4.) | 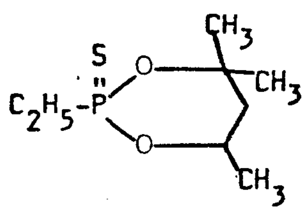 | 16 |
| 5.) | 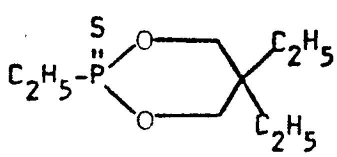 | 7 |
| 6.) | 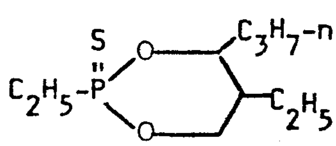 | 18 |
| 7.) | 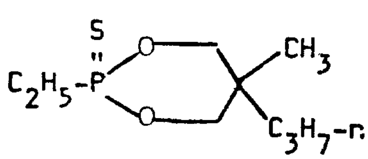 | 10 |

| Synergist Nr. | Formel | Verbindung aus Herstellungsbeispiel Nr. |
|---|---|---|
| 8.) | 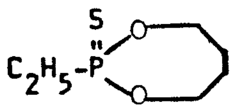 | 4 |
| 9.) | 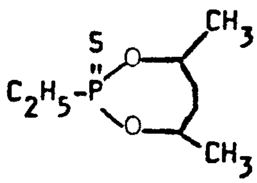 | 19 |
| 10.) | 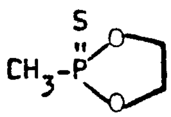 | 6 |
| 11.) | 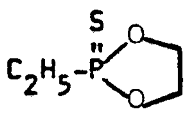 | 2 |
| 12.) | 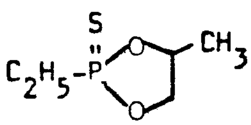 | 5 |
| 13.) | 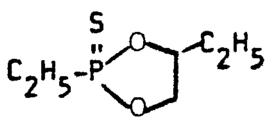 | 11 |
| 14.) | 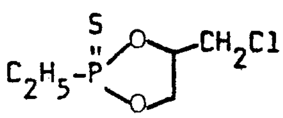 | 13 |
| 15.) | 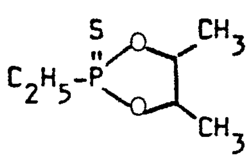 (d,l) | 8 |

| Synergist Nr. | Formel | Verbindung aus Herstellungsbeispiel Nr. |
|---|---|---|
| 16.) | 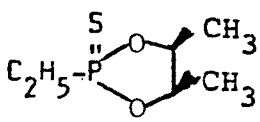 (meso) | 9 |
| 17.) | 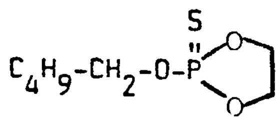 | 15 |
| 18.) | Piperonylbutoxid (bekannt) als Standard | - |

Besonders bevorzugt wird der Synergist Nr. 7.

## III Versuchsdurchführung

$KT_{100}$-Test für Synergisten

Testtiere: Musca domestica, Stamm Weymanns (gegen Carbamidsäureester und P-Ester resistent)

Lösungsmittel: Aceton

Von den Wirkstoffen, Synergisten und Gemischen aus Wirkstoffen und Synergisten werden Lösungen hergestellt und 2,5 ml davon in Petrischalen auf Filterpapierscheiben von 9,5 cm Durchmesser pipettiert. Das Filterpapier saugt die Lösungen auf. Die Petrischalen bleiben so lange offen stehen, bis das Lösungsmittel vollständig verdunstet ist. Anschließend gibt man 25 Testtiere in die Petrischalen und bedeckt sie mit einem Glasdeckel.

Der Zustand der Testtiere wird bis zu 6 Stunden laufend kontrolliert. Es wird diejenige Zeit ermittelt, die für eine 100 %ige knock down-Wirkung erforderlich ist. Wird die $KT_{100}$ nach 6 Stunden nicht erreicht, wird der %-Satz der knock down gegangenen Testtiere festgestellt.

Konzentrationen der Wirkstoffe, Synergisten und Gemische und ihre Wirkungen gehen aus der nachfolgenden Tabelle hervor.

## IV Versuchsergebnisse

| Wirkstoff + Kennbuchstabe | Synergist-Nr. | Konzentrationen in % Wirkstoff | + Synergist | KT 100 in Minuten bzw. % nach Minuten |
|---|---|---|---|---|
| A | - | 1,0 | - | 360' = 15 % |
| B | - | 1,0 | - | 360' = 25 % |
| C | - | 1,0 | - | 360' = 10 % |
| D | - | 0,2 | - | 360' = 95 % |
| E | - | 0,04 | - | 360' = 70 % |
| F | - | 0,2 | - | 150' |
| G | - | 0,04 | - | 105' |
| H | - | 0,0016 | - | 75' |
| I | - | 0,008 | - | 150' |
| J | - | 1,0 | - | 360' = 65 % |
| K | - | 0,008 | - | 360' = 90 % |
| L | - | 0,008 | - | 210' |
| - | 1 | - | 0,2 | 360' = 25 % |
| - | 2 | - | 1,0 | 360' = 25 % |
| - | 3 | - | 0,2 | 360' = 90 % |
| - | 4 | - | 1,0 | 360' |
| - | 5 | - | 0,2 | 360' = 90 % |
| - | 6 | - | 0,2 | 360' = 30 % |
| - | 7 | - | 0,2 | 360' = 90 % |
| - | 8 | - | 0,2 | 360' = 40 % |
| - | 9 | - | 1,0 | 360' = 90 % |
| - | 10 | - | 1,0 | 360' = 0 % |

## IV Versuchsergebnisse (Fortsetzung)

| Wirkstoff Kennbuchstabe | + | Synergist-Nr. | Konzentrationen in % Wirkstoff | + | Synergist | KT 100 in Minuten bzw. % nach Minuten |
|---|---|---|---|---|---|---|
| - | | 11 | - | | 1,0 | 360' = 40 % |
| - | | 12 | - | | 0,2 | 360' = 0 % |
| - | | 13 | - | | 1,0 | 360' = 25 % |
| - | | 14 | - | | 1,0 | 360' = 0 % |
| - | | 15 | - | | 1,0 | 360' = 40 % |
| - | | 16 | - | | 0,2 | 360' = 50 % |
| - | | 17 | - | | 1,0 | 360' = 70 % |
| - | | 18 | - | | 0,008 | 360' = 55 % |
| - | | 19 (Standard) | - | | 1,0 | 360' = 0 % |
| A | + | 19 | 0,2 | + | 0,2 | 360' = 90 % |
| A | + | 1 | 0,008 | + | 0,008 | 150' |
| A | + | 2 | 0,008 | + | 0,008 | 180' |
| A | + | 3 | 0,04 | + | 0,04 | 75' |
| A | + | 4 | 0,04 | + | 0,04 | 60' |
| A | + | 5 | 0,008 | + | 0,008 | 120' |
| A | + | 6 | 0,04 | + | 0,04 | 120' |
| A | + | 7 | 0,04 | + | 0,04 | 75' |
| A | + | 8 | 0,008 | + | 0,008 | 180' |
| A | + | 9 | 0,04 | + | 0,04 | 90' |
| A | + | 10 | 0,04 | + | 0,04 | 150' |
| A | + | 11 | 0,04 | + | 0,04 | 120' |
| A | + | 12 | 0,04 | + | 0,04 | 90' |

IV Versuchsergebnisse (Fortsetzung)

| Wirkstoff Kennbuchstabe | + | Synergist-Nr. | Konzentrationen in % Wirkstoff | + | Synergist | KT 100 in Minuten bzw. % nach Minuten |
|---|---|---|---|---|---|---|
| A | + | 13 | 0,008 | + | 0,008 | 180' |
| A | + | 14 | 0,04 | + | 0,04 | 90' |
| A | + | 15 | 0,008 | + | 0,008 | 150' |
| A | + | 16 | 0,04 | + | 0,04 | 75' |
| A | + | 17 | 0,04 | + | 0,04 | 90' |
| A | + | 18 | 0,008 | + | 0,008 | 105' |
| B | + | 19 | 1,0 | + | 1,0 | 360' = 75 % |
| B | + | 1 | 0,008 | + | 0,008 | 210' |
| B | + | 2 | 0,008 | + | 0,008 | 150' |
| B | + | 3 | 0,04 | + | 0,04 | 120' |
| B | + | 4 | 0,04 | + | 0,04 | 150' |
| B | + | 5 | 0,008 | + | 0,008 | 210' |
| B | + | 6 | 0,04 | + | 0,04 | 105' |
| B | + | 7 | 0,008 | + | 0,008 | 210' |
| B | + | 8 | 0,04 | + | 0,04 | 105' |
| B | + | 9 | 0,04 | + | 0,04 | 180' |
| B | + | 10 | 0,2 | + | 0,2 | 150' |
| B | + | 11 | 0,2 | + | 0,2 | 120' |
| B | + | 12 | 0,04 | + | 0,04 | 105' |
| B | + | 13 | 0,008 | + | 0,008 | 150' |
| B | + | 14 | 0,04 | + | 0,04 | 150' |
| B | + | 15 | 0,008 | + | 0,008 | 210' |
| B | + | 16 | 0,008 | + | 0,008 | 180' |

IV Versuchsergebnisse (Fortsetzung)

| Wirkstoff Kennbuchstabe | + | Synergist-Nr. | Konzentrationen in % Wirkstoff | + | Synergist | KT 100 in Minuten bzw. % nach Minuten |
|---|---|---|---|---|---|---|
| B | + | 17 | 0,04 | + | 0,04 | 150' |
| B | + | 18 | 0,008 | + | 0,008 | 180' |
| C | + | 19 | 0,2 | + | 0,2 | 360' = 85 % |
| C | + | 1 | 0,04 | + | 0,04 | 90' |
| C | + | 2 | 0,04 | + | 0,04 | 150' |
| C | + | 3 | 0,04 | + | 0,04 | 180' |
| C | + | 4 | 0,04 | + | 0,04 | 105' |
| C | + | 5 | 0,008 | + | 0,008 | 180' |
| C | + | 6 | 0,04 | + | 0,04 | 105' |
| C | + | 7 | 0,04 | + | 0,04 | 90' |
| C | + | 8 | 0,04 | + | 0,04 | 120' |
| C | + | 9 | 0,04 | + | 0,04 | 180' |
| C | + | 11 | 0,2 | + | 0,2 | 150' |
| C | + | 12 | 0,04 | + | 0,04 | 150' |
| C | + | 13 | 0,04 | + | 0,04 | 90' |
| C | + | 14 | 0,04 | + | 0,04 | 150' |
| C | + | 15 | 0,04 | + | 0,04 | 150' |
| C | + | 16 | 0,008 | + | 0,008 | 180' |
| C | + | 17 | 0,04 | + | 0,04 | 150' |
| C | + | 18 | 0,008 | + | 0,008 | 120' |

IV Versuchsergebnisse (Fortsetzung)

| Wirkstoff Kennbuchstabe | + | Synergist-Nr. | Konzentrationen in % Wirkstoff | + | Synergist | KT 100 in Minuten bzw. % nach Minuten |
|---|---|---|---|---|---|---|
| D | + | 19 | 0,2 | + | 0,2 | 150' |
| D | + | 1 | 0,2 | + | 0,2 | 75' |
| D | + | 2 | 0,2 | + | 0,2 | 90' |
| D | + | 3 | 0,2 | + | 0,2 | 90' |
| D | + | 4 | 0,2 | + | 0,2 | 90' |
| D | + | 5 | 0,04 | + | 0,04 | 120' |
| D | + | 6 | 0,2 | + | 0,2 | 60' |
| D | + | 7 | 0,2 | + | 0,2 | 75' |
| D | + | 8 | 0,2 | + | 0,2 | 105' |
| D | + | 9 | 0,2 | + | 0,2 | 120' |
| D | + | 11 | 0,2 | + | 0,2 | 105' |
| D | + | 12 | 0,2 | + | 0,2 | 105' |
| D | + | 13 | 0,2 | + | 0,2 | 75' |
| D | + | 14 | 0,2 | + | 0,2 | 75' |
| D | + | 15 | 0,04 | + | 0,04 | 120' |
| D | + | 16 | 0,2 | + | 0,2 | 75' |
| D | + | 17 | 0,2 | + | 0,2 | 75' |
| E | + | 19 | 0,04 | + | 0,04 | 90' |
| E | + | 5 | 0,04 | + | 0,04 | 60' |
| E | + | 6 | 0,04 | + | 0,04 | 60' |
| E | + | 7 | 0,04 | + | 0,04 | 60' |
| E | + | 13 | 0,04 | + | 0,04 | 60' |

0174515

IV Versuchsergebnisse (Fortsetzung)

| Wirkstoff Kennbuchstabe | + | Synergist-Nr. | Konzentrationen in % Wirkstoff | + | Synergist | KT 100 in Minuten bzw. % nach Minuten |
|---|---|---|---|---|---|---|
| F | + | 19 | 0,2 | + | 0,2 | 60' |
| F | + | 1 | 0,2 | + | 0,2 | 45' |
| F | + | 2 | 0,2 | + | 0,2 | 30' |
| F | + | 3 | 0,2 | + | 0,2 | 30' |
| F | + | 4 | 0,2 | + | 0,2 | 30' |
| F | + | 5 | 0,2 | + | 0,2 | 30' |
| F | + | 6 | 0,2 | + | 0,2 | 30' |
| F | + | 7 | 0,2 | + | 0,2 | 30' |
| F | + | 8 | 0,2 | + | 0,2 | 30' |
| F | + | 9 | 0,2 | + | 0,2 | 45' |
| F | + | 12 | 0,2 | + | 0,2 | 45' |
| F | + | 13 | 0,2 | + | 0,2 | 45' |
| F | + | 14 | 0,2 | + | 0,2 | 30' |
| F | + | 15 | 0,2 | + | 0,2 | 30' |
| F | + | 17 | 0,2 | + | 0,2 | 30' |
| G | + | 19 | 0,04 | + | 0,04 | 90' |
| G | + | 4 | 0,04 | + | 0,04 | 75' |
| G | + | 5 | 0,04 | + | 0,04 | 45' |
| G | + | 12 | 0,04 | + | 0,04 | 75' |
| G | + | 16 | 0,04 | + | 0,04 | 75' |
| G | + | 17 | 0,04 | + | 0,04 | 75' |

IV Versuchsergebnisse (Fortsetzung)

| Wirkstoff Kennbuchstabe | + | Synergist-Nr. | Konzentrationen in % Wirkstoff | + | Synergist | KT 100 in Minuten bzw. % nach Minuten |
|---|---|---|---|---|---|---|
| H | + | 19 | 0,0016 | + | 0,0016 | 60' |
| H | + | 2 | 0,0016 | + | 0,0016 | 45' |
| H | + | 18 | 0,0016 | + | 0,0016 | 45' |
| I | + | 19 | 0,008 | + | 0,008 | 105' |
| I | + | 3 | 0,008 | + | 0,008 | 90' |
| I | + | 7 | 0,008 | + | 0,008 | 90' |
| I | + | 13 | 0,008 | + | 0,008 | 90' |
| I | + | 17 | 0,008 | + | 0,008 | 90' |
| J | + | 19 | 0,2 | + | 0,2 | 360' = 55 % |
| J | + | 1 | 0,04 | + | 0,04 | 180' |
| J | + | 11 | 0,04 | + | 0,04 | 240' |
| K | + | 19 | 0,008 | + | 0,008 | 150' |
| K | + | 2 | 0,008 | + | 0,008 | 120' |
| K | + | 3 | 0,008 | + | 0,008 | 105' |
| K | + | 4 | 0,008 | + | 0,008 | 105' |
| K | + | 6 | 0,008 | + | 0,008 | 120' |
| K | + | 7 | 0,008 | + | 0,008 | 120' |
| K | + | 8 | 0,008 | + | 0,008 | 120' |
| K | + | 13 | 0,008 | + | 0,008 | 105' |
| K | + | 16 | 0,008 | + | 0,008 | 120' |
| K | + | 18 | 0,008 | + | 0,008 | 120' |

IV Versuchsergebnisse (Fortsetzung)

| Wirkstoff Kennbuchstabe | + | Synergist-Nr. | Konzentrationen in % Wirkstoff | + | Synergist | KT 100 in Minuten bzw. % nach Minuten |
|---|---|---|---|---|---|---|
| L | + | 19 | 0,008 | + | 0,008 | 360' = 95 % |
| L | + | 1 | 0,008 | + | 0,008 | 120' |
| L | + | 2 | 0,008 | + | 0,008 | 150' |
| L | + | 3 | 0,008 | + | 0,008 | 120' |
| L | + | 6 | 0,008 | + | 0,008 | 150' |
| L | + | 7 | 0,008 | + | 0,008 | 150' |
| L | + | 15 | 0,008 | + | 0,008 | 150' |
| L | + | 18 | 0,008 | + | 0,008 | 75' |

Die Herstellung der erfindungsgemäß verwendbaren Synergisten soll anhand der folgenden Beispiele erläutert werden:

 

Beispiel 1

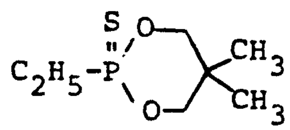

1.) 2-Ethyl-5,5-dimethyl-1,3,2-dioxophosphorinan-2-sulfid

32,6 g (0,2 mol) Ethanthiophosphonsäuredichlorid, gelöst in 300 ml Toluol, werden innerhalb von 3 h bei 20°C mit einer Mischung von 20 g (0,2 mol) Neopentylglycol und 40,4 g (0,4 mol) Triethylamin in 300 ml Methylenchlorid versetzt. Man rührt 12 h bei 20°C, filtriert den Feststoff ab, trocknet über Magnesiumsulfat, destilliert die Lösungsmittel im Wasserstrahlvakuum ab und entfernt flüchtige Bestandteile im Ölpumpenvakuum (50°C Bad/0,1 mbar). Zur weiteren Reinigung wird erneut in Methylenchlorid aufgenommen, über Kieselgel abgesaugt und wie oben beschrieben von flüchtigen Bestandteilen befreit. Man erhält als Rückstand 20,4 g (53 % der Theorie) 2-Ethyl-5,5-dimethyl-1,3,2-dioxophosphorinan-2-sulfid mit einem Brechungsindex $n_D^{20}$ von 1,5042.

Analog kann man erhalten (bei den Siedepunkten ist der Druck in mbar angegeben):

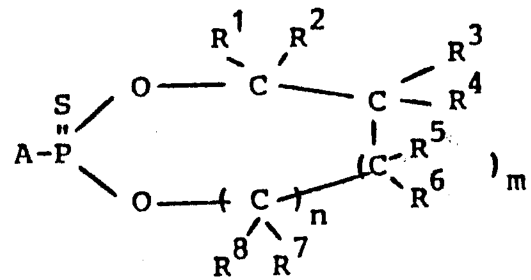

(I)

| Beispiel Nr. | A | n | m | $R^1$ | $R^2$ | $R^3$ | $R^4$ | $R^5$ | $R^6$ | $R^7$ | $R^8$ | Phys. Daten |
|---|---|---|---|---|---|---|---|---|---|---|---|---|
| 2 | $C_2H_5$ | 0 | 0 | H | H | H | H | - | - | - | - | $n_D^{20}$ = 1,5218 |
| 3 | " | 0 | 1 | " | " | " | " | H | H | - | - | $n_D^{20}$ = 1,5101 |
| 4 | " | 1 | 1 | " | " | " | " | " | " | H | H | $n_D^{20}$ = 1,5227 |
| 5 | " | 0 | 0 | $CH_3$ | " | " | " | - | - | - | - | $n_D^{20}$ = 1,5291 |
| 6 | $CH_3$ | 0 | 0 | H | " | " | " | - | - | - | - | Fp. 75°C |
| 7 | $C_2H_5$ | 0 | 1 | H | H | $C_2H_5$ | $C_2H_5$ | H | H | - | - | $n_D^{20}$ = 1,5041; Fp. 38°C |
| 8 | " | 0 | 0 | $CH_3$ | H (dl) - Gemisch | $CH_3$ | H | - | - | - | - | $n_D^{20}$ = 1,4994 |
| 9 | " | 0 | 0 | $CH_3$ | H (meso) | $CH_3$ | H | - | - | - | - | $n_D^{20}$ = 1,5147 |
| 10 | " | 0 | 1 | H | H | $CH_3$ | $n-C_3H_7$ | H | H | - | - | $n_D^{20}$ = 1,4985 |
| 11 | " | 0 | 0 | $C_2H_5$ | H | H | H | - | - | - | - | $n_D^{20}$ = 1,5112 |

| Bsp. Nr. | A | n | m | $R^1$ | $R^2$ | $R^3$ | $R^4$ | $R^5$ | $R^6$ | $R^7$ | $R^8$ | Phys. Daten |
|---|---|---|---|---|---|---|---|---|---|---|---|---|
| 12 | $(CH_3)_3CCH_2NH$ | 0 | 0 | H | H | H | H | - | - | - | - | Rf. (Hexan:Aceton= 7:3) 0,614 |
| 13 | $C_2H_5$ | 0 | 0 | $CH_2Cl$ | " | " | " | - | - | - | - | $n_D^{20}$ = 1,5286 |
| 14 | " | 0 | 1 | $CH_3$ | " | " | " | H | H | - | - | $n_D^{20}$ = 1,5039 |
| 15 | $(CH_3)_3CCH_2O$ | 0 | 0 | H | H | H | H | - | - | - | - | $n_D^{20}$ = 1,4782 |
| 16 | $C_2H_5$ | 0 | 1 | $CH_3$ | $CH_3$ | H | H | $CH_3$ | H | - | - | $n_D^{20}$ = 1,5019 |
| 17 | $(CH_3)_2CHO$ | 0 | 0 | H | H | H | H | - | - | - | - | Rf. (Hex:Ac=7:3) 0,659 |
| 18 | $C_2H_5$ | 0 | 1 | n-$C_3H_7$ | H | $CH_3CH_2$ | H | H | H | - | - | $n_D^{20}$ = 1,4988 |
| 19 | " | 1 | 1 | $CH_3$ | H | H | H | H | H | $CH_3$ | H | $n_D^{20}$ = 1,5199 |
| 20 | " | 0 | 1 | $CH(CH_3)_2$ | H | $CH_3$ | $CH_3$ | " | " | - | - | |
| 21 | " | 0 | 1 | H | H | $-CH_2-C=C-CH_2-CH_2-$ (H, $CH_3$) | | " | " | - | - | |
| 22 | n-$C_4H_9$ | 0 | 1 | " | " | n-$C_3H_7$ | $CH_3$ | " | " | - | - | |
| 23 | $C_2H_5$ | 0 | 1 | " | " | 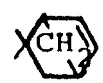 | | " | " | - | - | |

| Beispiel Nr. | A | n | m | $R^1$ | $R^2$ | $R^3$ | $R^4$ | $R^5$ | $R^6$ | $R^7$ | $R^8$ | Phys. Daten |
|---|---|---|---|---|---|---|---|---|---|---|---|---|
| 24 | $C_2H_5$ | 0 | 1 | H | H | $-CH_2-CH=CH-(CH_2)_2-$ | | H | H | - | - | |
| 25 | $n-C_3H_7$ | 0 | 1 | " | " | $n-C_3H_7$ | $CH_3$ | " | " | - | - | $n_D^{20}$ = 1,500 |
| 26 | $C_2H_5$ | 0 | 0 | n-$C_3H_7$ | " | H | H | - | - | - | - | |
| 27 | " | 0 | 0 | n-$C_4H_9$ | " | " | " | - | - | - | - | $n_D^{20}$ = 1,496 |
| 28 | " | 0 | 0 | n-$C_6H_{13}$ | " | " | " | - | - | - | - | $n_D^{20}$ = 1,485 |
| 29 | " | 0 | 0 | H | $-CH_2(CH_2)_2-$ $-CH_2-$(trans) | | " | - | - | - | - | Fp. 107°C |
| 30 | " | 0 | 1 | H | H | $-CH_2(CH_2)_2CH_2-$ | | H | H | - | - | Fp. 48°C |
| 31 | " | 0 | 0 | $CH_2S-$ $-C_2H_5$ | " | H | H | - | - | - | - | $n_D^{20}$ = 1,539 |
| 32 | $SC_3H_7-n$ | 0 | 1 | H | H | $C_2H_5$ | $C_2H_5$ | H | H | - | - | Fp. 43°C |
| 33 | $CH_3$ | 0 | 1 | H | $CH_3$ | $CH_3$ | $CH_3$ | H | $CH_3$ | - | - | |

| Beispiel Nr. | A | n | m | $R^1$ | $R^2$ | $R^3$ | $R^4$ | $R^5$ | $R^6$ | $R^7$ | $R^8$ | Phys. Daten |
|---|---|---|---|---|---|---|---|---|---|---|---|---|
| 34 | $CH_3$ | 0 | 1 | H | H | $C_2H_5$ | $C_2H_5$ | H | H | - | - | Fp. 61°C |
| 35 | $SC_3H_7$-n | 0 | 1 | H | H | $CH_3$ | $CH_3$ | H | H | - | - | Fp. 37°C |
| 36 | $CH_3$ | 0 | 1 | H | $CH_3$ | H | $CH_3$ | H | $CH_3$ | - | - | |
| 37 | $CH_3$ | 0 | 1 | H | $CH_3$ | H | H | H | H | - | - | |
| 38 | $CH_3$ | 0 | 1 | H | H | $NO_2$ | $CH_3$ | H | H | - | - | Fp. 108°C |
| 39 | $CH_3$ | 0 | 1 | H | H | $NO_2$ | $C_2H_5$ | H | H | - | - | Fp. 104°C |
| 40 | $NHCH_3$ | 0 | 1 | H | H | $C_2H_5$ | $C_2H_5$ | H | H | - | - | Fp. 94°C |
| 41 | $CH_3$ | 0 | 1 | $CH_3$ | $CH_3$ | H | H | $CH_3$ | H | - | - | |
| 42 | $CH_3$ | 0 | 1 | H | H | $ClCH_2$ | $C_2H_5$ | H | H | - | - | Fp. 86°C |
| 43 | $NHC_3H_7$i | 0 | 1 | H | H | $C_2H_5$ | $C_2H_5$ | H | H | - | - | Fp. 53-55°C |
| 44 | $CH_3$ | 0 | 1 | H | H | $CH_3$ | $CH_3$ | H | H | - | - | Fp. 63°C |
| 45 | $CH_3$ | 0 | 1 | H | H | $CH_3$ | n-$C_3H_7$ | H | H | - | - | |
| 46 | $CH_3$ | 0 | 1 | H | i-$C_3H_7$ | $CH_3$ | $CH_3$ | H | H | - | - | Fp. 58°C |
| 47 | $CH_3$ | 0 | 1 | H | H | H | H | H | H | - | - | Fp. 82-83°C |
| 48 | $C_2H_5$ | 0 | 1 | H | $CH_3$ | H | $CH_3$ | H | $CH_3$ | - | - | |
| 49 | $CH_3$ | 0 | 1 | H | H | H | $C_2H_5$ | H | n-$C_3H_7$ | - | - | |
| 50 | $CH_3$ | 0 | 1 | H | H | $C_2H_5$ | n-$C_4H_9$ | H | H | - | - | |

| Beispiel Nr. | A | n | m | $R^1$ | $R^2$ | $R^3$ | $R^4$ | $R^5$ | $R^6$ | $R^7$ | $R^8$ | Phys. Daten |
|---|---|---|---|---|---|---|---|---|---|---|---|---|
| 51 | $CH_3$ | 0 | 0 | H | H | H | $CH_3$ | - | - | - | - | |
| 52 | $CH_3$ | 0 | 0 | H | $CH_3$ | H | $CH_3$ | - | - | - | - | |
| 53 | $C_2H_5$ | 0 | 1 | H | $CH_3$ | $CH_3$ | $CH_3$ | H | $CH_3$ | - | - | |
| 54 | $N(CH_3)_2$ | 0 | 1 | H | H | $CH_3$ | n-$C_3H_7$ | H | H | - | - | $Kp._{0,01}$ 96°C |
| 55 | $N(C_2H_5)_2$ | 0 | 1 | H | H | $CH_3$ | $CH_3$ | H | H | - | - | Fp. 61°C |
| 56 | $N(CH_3)_2$ | 0 | 1 | H | H | $C_2H_5$ | $C_2H_5$ | H | H | - | - | Fp. 51°C |
| 57 | $N(CH_3)_2$ | 0 | 1 | H | H | $CH_3$ | n-$C_3H_7$ | H | H | - | - | Fp. 91-95°C |
| 58 | $SC_2H_5$ | 0 | 0 | H | $CH_3$ | H | $CH_3$ | - | - | - | - | $Kp._{0,07}$ 84°C |
| 59 | $SC_2H_5$ | 0 | 1 | H | H | $C_2H_5$ | $C_2H_5$ | H | H | - | - | |
| 60 | $N(CH_3)_2$ | 0 | 0 | H | $CH_3$ | H | $CH_3$ | - | - | - | - | $Kp._{0,01}$ 86°C |
| 61 | $N(C_2H_5)_2$ | 0 | 0 | H | $CH_3$ | H | $CH_3$ | - | - | - | - | $Kp._{0,01}$ 92°C |
| 62 | $OCH_3$ | 0 | 1 | H | H | $CH_3$ | $CH_3$ | H | H | - | - | Fp. 92°C |
| 63 | $N(C_2H_5)_2$ | 0 | 0 | H | H | H | H | - | - | - | - | $Kp._{0,01}$ 90°C |
| 64 | $SC_2H_5$ | 0 | 0 | H | $CH_3$ | H | H | - | - | - | - | $Kp._{0,01}$ 88°C |
| 65 | $N(CH_3)_2$ | 0 | 0 | H | H | H | H | - | - | - | - | $Kp._{0,01}$ 84°C |
| 66 | $SC_2H_5$ | 0 | 0 | H | H | H | H | - | - | - | - | $Kp._{0,01}$ 73°C |
| 67 | $N(C_2H_5)_2$ | 0 | 0 | H | H | H | $CH_3$ | - | - | - | - | $Kp._{0,01}$ 91°C |
| 68 | $CH_3$ | 0 | 1 | H | H | $BrCH_2$ | $BrCH_2$ | H | H | - | - | |

| Beispiel Nr. | A | n | m | $R^1$ | $R^2$ | $R^3$ | $R^4$ | $R^5$ | $R^6$ | $R^7$ | $R^8$ | Phys. Daten |
|---|---|---|---|---|---|---|---|---|---|---|---|---|
| 69 | $OCH_2CH=CH_2$ | 0 | 1 | H | H | $CH_3$ | $CH_3$ | H | H | - | - | |
| 70 | 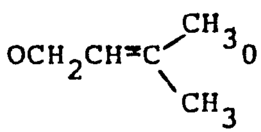 | 0 | 1 | H | H | $CH_3$ | $CH_3$ | H | H | - | - | |
| 71 | $C_2H_5$ | 0 | 1 | H | H | $C_2H_5$ | $C_4H_9$-n | H | H | - | - | $n_D^{20} = 1,5009$ |

Patentansprüche

1. Schädlingsbekämpfungsmittel, welche, neben arthropodiziden Wirkstoffen, wenigstens eine Verbindung der allgemeinen Formel (I)

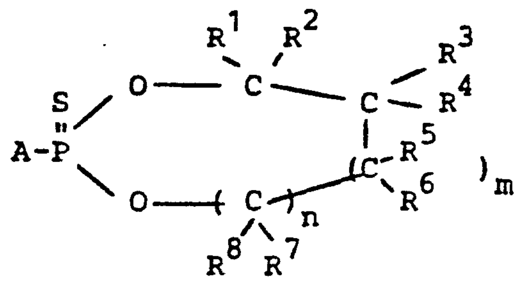

(I)

in welcher

A für Amino, Alkylamino, Dialkylamino oder N-Alkyl-N-arylamino oder für gegebenenfalls substituierte Reste aus der Reihe Alkyl, Alkenyl, Alkoxy, Alkenyloxy, Alkylthio, Aralkyl, Aralkoxy, Phenyl, Phenoxy oder Phenylthio steht,

$R^1$, $R^2$, $R^3$, $R^4$, $R^5$, $R^6$, $R^7$ und $R^8$ gleich oder verschieden sind und für Wasserstoff, für gegebenenfalls durch Halogen substituierte Reste aus der Reihe Alkyl, Alkenyl, Alkoxyalkyl und Alkylthioalkyl oder für Halogen, Nitro oder Dialkylaminoalkyl oder für gegebenenfalls substituiertes Phenyl oder Benzyl stehen und wobei zwei der Reste $R^1$ bis $R^8$ gemeinsam mit dem bzw. den Kohlenstoffatomen, an welche

sie gebunden sind auch einen gegebenenfalls substituierten mono- oder bicyclischen Ring bilden können und

n und m gleich oder verschieden sind und 0 oder 1 bedeuten,

als Synergist enthalten.

2. Schädlingsbekämpfungsmittel gemäß Anspruch 1, wobei in der allgemeinen Formel (I)

A für Amino, $C_1$-$C_4$-Alkylamino, Di-($C_1$-$C_4$-alkyl)-amino und N-Phenyl-N-($C_1$-$C_4$-alkyl)-amino oder für gegebenenfalls durch Halogen substituiertes $C_1$-$C_4$-Alkyl, $C_2$-$C_4$-Alkenyl, $C_2$-$C_6$-Alkenyloxy, $C_1$-$C_4$-Alkoxy, Phenyl, Benzyl, Benzylcxy oder Phenethoxy oder für Phenoxy, welches durch einen Rest der Reihe Halogen, Cyano, Nitro, Carbamoyl, $C_1$-$C_4$-Alkylsulfonyl, $C_1$-$C_4$-Alkylsulfinyl, $C_1$-$C_4$-Alkylcarbonyl, $C_1$-$C_4$-Alkyl, $C_1$-$C_4$-Alkoxy, $C_1$-$C_4$-Alkylthio und/oder $C_1$-$C_4$-Alkoxycarbonyl substituiert sein kann, steht,

$R^1$ bis $R^8$ gleich oder verschieden sind und für Wasserstoff, Halogen, $NO_2$, $C_1$-$C_6$-Alkyl, welches durch Halogen substituiert sein kann, $C_2$-$C_8$-Alkenyl, Di-($C_1$-$C_4$-alkyl)-amino, $C_1$-$C_4$-Alkoxy-$C_1$-$C_4$-alkyl, $C_1$-$C_4$-Alkylthio-$C_1$-$C_4$-alkyl, Benzyl oder Phenyl stehen oder 2 der Reste $R^1$ bis $R^8$ gemeinsam mit dem oder den

Kohlenstoffatomen, an welche sie gebunden sind, einen $C_5$-$C_7$-Cycloalkyl- oder -Cycloalkenyl-Ring bilden, welcher durch Methyl oder Ethyl substituiert sein kann und welcher durch eine Methylen- oder Ethylengruppe zu einem bicyclischen Ring überbrückt sein kann und

n und m gleich oder verschieden sind und für 0 oder 1 stehen.

3. Schädlingsbekämpfungsmittel gemäß Anspruch 1, wobei in der allgemeinen Formel (I)

A für $C_1$-$C_4$-Alkyl, $C_1$-$C_6$-Alkoxy, $C_2$-$C_5$-Alkenyloxy, $C_1$-$C_4$-Alkylthio, $C_1$-$C_4$-Alkylamino oder Di-($C_1$-$C_4$-alkyl)-amino steht,

$R^1$ bis $R^8$ gleich oder verschieden sind und für Wasserstoff, Nitro, gegebenenfalls durch Halogen substituiertes $C_1$-$C_4$-Alkyl oder $C_1$-$C_4$-Alkylthio-$C_1$-$C_4$-alkyl stehen oder zwei der Reste $R^1$ bis $R^8$ gemeinsam mit dem bzw. den Kohlenstoffatomen, an welche sie gebunden sind, einen 5- oder 6-gliedrigen Cycloalkyl- oder Cycloalkenylring bilden, der durch eine Methylen- oder Ethylen-Gruppe zu einem bicyclischen Ring überbrückt sein kann und

n und m gleich oder verschieden sind und für 0 oder 1 stehen.

4. Schädlingsbekämpfungsmittel gemäß den Ansprüchen 1 bis 3, welche wenigstens einen arthropodiziden Wirkstoff aus folgenden Wirkstoffgruppen enthalten:

   1. Carbamidsäureester und/oder

   2. Carbonsäureester einschließlich der natürlichen sowie synthetischen Pyrethroide und/oder

   3. Phosphorverbindungen, wie Phosphorsäure- und Phosphonsäureestern, einschließlich der Thio- und Dithioverbindungen.

5. Schädlingsbekämpfungsmittel gemäß den Ansprüchen 1 bis 4, welche wenigstens einen Carbamidsäureester als arthropodiziden Wirkstoff enthalten.

6. Schädlingsbekämpfungsmittel gemäß den Ansprüchen 1 bis 5, in welchen Synergist und arthropodizide Mittel in Mischungsverhältnissen (Gewicht) zwischen 1:100 und 100:1 vorliegen.

7. Verwendung der Phosphorheterocyclen der allgemeinen Formel I gemäß Anspruch 1, als Synergisten in Schädlingsbekämpfungsmitteln.

8. Verwendung der Phosphorheterocyclen der allgemeinen Formel I gemäß Anspruch 1 als Synergisten in

Schädlingsbekämpfungsmitteln, welche wenigstens einen Carbamidsäureester als arthropodiziden Wirkstoff enthalten.

9. Verfahren zur Bekämpfung von Schädlingen, vorzugsweise von Arthropoden, insbesondere Insekten und Spinnentieren, dadurch gekennzeichnet, daß man wenigstens eine Verbindung der allgemeinen Formel (I) gemäß Anspruch 1 sowie wenigstens einen arthropodiziden Wirkstoff auf die Schädlinge oder ihren Lebensraum einwirken läßt.

10. Verfahren zur Herstellung der Schädlingsbekämpfungsmittel gemäß den Ansprüchen 1 bis 6, dadurch gekennzeichnet, daß man wenigstens eine Verbindung der allgemeinen Formel (I) gemäß Anspruch 1 sowie wenigstens einen arthropodiziden Wirkstoff mit inerten Trägerstoffen, Verdünnungsmitteln und/oder oberflächenaktiven Stoffen mischt.

11. Verbindung der Formel